# EUROPEAN PATENT APPLICATION

(11) **EP 1 677 526 A1**
(43) Date of publication of application: **05.07.2006**
(21) Application number: 05112679.5
(22) Date of filing: 21.12.2005
(51) Int. Cl.: H04N 5/445

(54) **Method of providing rebroadcast information, and method and apparatus for recording broadcast program**

(30) Priority: 30.12.2004 KR 2004116960
(71) Applicant: SAMSUNG ELECTRONICS CO., LTD., Suwon-si, Gyeonggi-do (KR)
(72) Inventor: Kwon, Oh-hyun 1118 Bello City, 1135-1, Suwon-si (KR); Jeon, Sung-min 241-1603 Hwanggol Maeul 2-danji Apt, Suwon-si (KR)
(74) Representative: Waddington, Richard

(57) **Abstract**

A method and apparatus for recording a broadcast program, by which a user can know whether a program the user wants to record will be rebroadcasted using electronic program guide (EPG) information, thereby allowing the user to choose whether to continue or cancel recording of the broadcast program. The method includes: searching whether a broadcast program that a user wants to record will be rebroadcasted using information about the broadcast program included in a broadcast signal; and displaying information about whether the broadcast program will be rebroadcasted to the user according to the searching result such that the user can decide whether to continue or cancel recording of the broadcast program.

## Description

Apparatuses and methods consistent with the present invention relate to recording a broadcast program, and more particularly, to providing rebroadcast information, and recording a broadcast program by which a user is informed via electronic program guide (EPG) information whether a program the user wants to record will be rebroadcasted, thereby allowing the user to decide whether to continue or cancel recording the program.

Recently, personal video recorder (PVR) digital broadcast recording apparatuses with a built-in storage medium such as a hard disk have been developed and commonly used to record and reproduce digital broadcast. Generally, a PVR digital broadcast recording apparatus has a function that allows a user to schedule recording of a desired broadcast program. The scheduled recording function is performed by receiving scheduled recording information, for example, broadcast channel information, a broadcast program title and recording time. The scheduled recording information is included in an EPG which is multiplexed on a digital video signal and transmitted to the PVR digital broadcasting recording apparatus. The EPG is a broadcast program guide which provides users with convenience to select a channel from multi channels.

Further, the digital broadcast recording apparatus generates an On Screen Display (OSD) and displays it on a screen of an external connected device such as a television in order to allow the user to more easily set the scheduled recording function.

In addition, the digital broadcast recording apparatus receives scheduled recording information chosen by a user through the OSD and stores the scheduled recording information in a non-volatile memory included in the apparatus. Then, the digital broadcast recording apparatus chooses a broadcast channel corresponding to the scheduled recording information at a scheduled recording time and performs a scheduled recording operation to record the scheduled broadcast program in hard disk or the like.

Accordingly, a user uses the digital broadcast recording apparatus to record a program that is being broadcasted or any program that will be broadcasted in the future at the hard disk and watch the recorded program later.

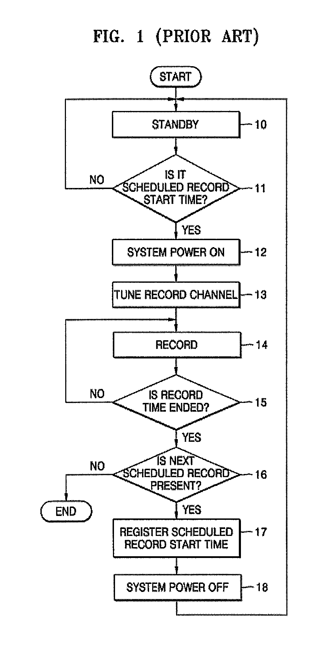

FIG. 1 is a flowchart illustrating a method of scheduling recording of a broadcast program using a conventional PVR digital broadcast recording apparatus.

First, video/audio/data streams are transmitted from a broadcasting station, and EPG including information about a broadcast program (information about time, a synopsis, recording, etc.) is obtained from the streams. A user may register the scheduled recording of a desired broadcast program using the EPG. Information about the scheduled record, which is registered by the user, is stored in an electrically erasable and programmable read only memory (EEPROM), a non-volatile memory, of the PVR digital broadcast recording apparatus in the order of scheduled recording time.

Then, when a system of the PVR digital broadcast recording apparatus is turned on or off, a microcomputer (MICOM) of the PVR digital broadcast recording apparatus enters a standby state (operation 10).

At a scheduled recording start time of the broadcast program that the user wants to record, the system is turned on (operation 12), and the system tunes a channel on which a program scheduled to be recorded is transmitted using the information stored in the EEPROM (operation 13).

Next, the scheduled recording program is recorded on a hard disk of the PVR digital broadcast apparatus (operation 14), and when the recording time ends, the recording is finished (operation 15).

After information corresponding to a program recorded completely is deleted from the EEPROM, it is determined whether other program is scheduled to be recorded next (operation 16). When such program exists, the program is registered as the first program for recording and a scheduled recording time of this program is set in the MICOM (operation 17).

Then, the system of the PVR digital broadcast recording apparatus is turned off (operation 18), and enters a standby state.

When there is no program to be recorded next, the system is completely turned off. The above operations are terminated after being repeatedly performed until the recording of all scheduled programs registered by a user is completed.

As described above, according to the conventional broadcast program recording method, information about the program scheduled to be recorded, such as a start time of the program, is previously input and then the program is recorded.

However, since the storage capacity of the hard disk of the recording apparatus is limited to continuously store new broadcast programs, old programs must be deleted from the hard disk. Considering the limited storage of hard disk, if a broadcast program that a user wants to record will be rebroadcasted in the future, the user may not need to record the program.

However, since the broadcast program recording apparatus according to the prior art performs the recording regardless of whether the program will be rebroadcasted, the storage capacity of the hard disk may be insufficient, and therefore, the user may not be able to record the desired broadcast program.

Further, when a previously recorded and stored broadcast program is deleted, since the recording apparatus does not provide information about a program that will be rebroadcasted, the user should check a list of recorded broadcast programs and choose the program to be deleted.

The present invention provides a method and apparatus for recording a broadcast program and a method of proving rebroadcast information of a broadcast program that a user wants to record to help the user to easily choose a program to be recorded.

The present invention also provides a method and apparatus for recording a broadcast program and a method of providing rebroadcast information, which provide rebroadcast information about whether programs to be recorded will be rebroadcasted when two or more programs intended to be recorded are broadcasted on different channels, thereby allowing a user to more easily choose a program to be recorded.

The present invention also provides a method and apparatus for recording a broadcast program and a method of providing rebroadcast information, which allow the storage capacity of a digital broadcast recording apparatus to be efficiently used.

According to the present invention there is provided an apparatus and method as set forth in the appended claims. Preferred features of the invention will be apparent from the dependent claims, and the description which follows.

According to an aspect of the present invention, there is provided a recording method for a broadcast program recording apparatus, comprising: searching whether a broadcast program that a user wants to record will be rebroadcasted using information about the broadcast program included in a broadcast signal; and displaying information about whether the broadcast program will be rebroadcasted to the user according to the searching result such that the user can decide whether to continue or cancel recording of the broadcast program.

The broadcast program may be searched whether it will be rebroadcasted by comparing a title of the broadcast program that the user wants to record with a broadcast program title included in the information about the broadcast program.

When the broadcast program is recorded in an instant recording mode, the recording may be started prior to searching whether the broadcast program will be rebroadcasted and then the searching is performed.

The recording method may further comprise: setting scheduled recording information by the user prior to searching whether the broadcast program that the user wants to record will be rebroadcasted when the broadcast program is recorded in a scheduled recording mode, wherein the searching is performed using the scheduled recording information and the information about the broadcast program.

The searching may be sequentially performed in the order of a channel on which the broadcast program that the user wants to record is being broadcasted, other channels, and a stored program.

The recording method may further comprise: storing rebroadcast information of a broadcast program that will be rebroadcasted when recording of the broadcast program is cancelled; and informing a user of the rebroadcast information before the broadcast program is rebroadcasted.

The rebroadcast information may include a title of the cancelled broadcast program and scheduled rebroadcast time.

The recording method may further comprise: receiving information about new broadcast program and cyclically searching whether an already stored broadcast program will be rebroadcasted.

The recording method may further comprise: displaying rebroadcast information of the already stored broadcast program to the user such that the user decides whether to delete or maintain the stored program when it is determined that the already stored broadcast program will be rebroadcasted through the cyclical searching.

According to another aspect of the present invention, there is provided an apparatus for receiving a broadcast signal including electronic program guide (EPG) information that provides information about a broadcast program and recording the broadcast program, the apparatus comprising: an EPG processing unit for searching whether a program a user wants to record will be rebroadcasted by analyzing the EPG information; and a control unit for transmitting information about a program to be recorded to the EPG processing unit, receiving the searching result from the EPG processing unit, and providing the searching result to the user.

The EPG processing unit may include a broadcast information generating unit that is operable to analyze the EPG information and generates information about a program to be broadcasted and a rebroadcast information searching unit that is operable to search whether a program to be recorded will be rebroadcasted by searching the generated information according to a request of the control unit.

The rebroadcast information searching unit may be operable to search whether the program to be recorded will be rebroadcasted by comparing a title of the program to be recorded with a program title included in the EPG information.

The rebroadcast information searching unit may be operable to sequentially perform the searching in the order of a channel on which the program to be recorded is being broadcasted, another channel, and a stored program.

When the user cancels recording of a program that will be rebroadcasted, the control unit may be operable to store rebroadcast information of the cancelled program and informs the user of the rebroadcast information before the program is rebroadcasted.

The EPG processing unit may be operable to cyclically receive new EPG information and search whether an already stored program will be rebroadcasted.

According to still another aspect of the present invention, there is provided a method of providing rebroadcast information of a broadcast program, comprising: searching whether a broadcast program will be rebroadcasted using information about the broadcast program included in a broadcast signal; and displaying information about whether the broadcast program will be rebroadcasted to a user according to the searching result.

For a better understanding of the invention, and to show how embodiments of the same may be carried into effect, reference will now be made, by way of example, to the accompanying diagrammatic drawings in which:
FIG. 1 is a flowchart illustrating a method of scheduling recording of a broadcast program using a conventional PVR digital broadcast recording apparatus;
FIG. 2 is a block diagram of a broadcast program recording apparatus according to an exemplary embodiment of the present invention; and
FIG. 3 is a block diagram of an EPG processing unit of FIG. 2 according to an exemplary embodiment of the present invention;
FIG. 4 is a diagram illustrating a record set mode screen according to an exemplary embodiment of the present invention;
FIG. 5 is a flowchart illustrating an operation of a broadcast program recording apparatus during an instant recording mode according to an exemplary embodiment of the present invention;
FIG. 6 is a flowchart illustrating an operation of the broadcast program recording apparatus during a scheduled record mode; and
FIG. 7 is a flowchart illustrating a method of searching whether a program stored in the broadcast program recording apparatus will be rebroadcasted according to an exemplary embodiment of the present invention.

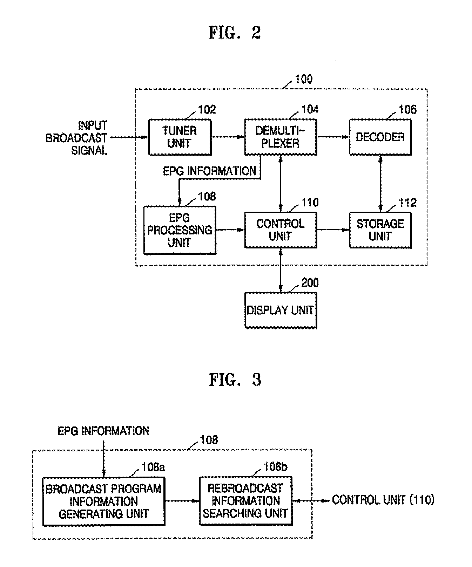

FIG. 2 is a block diagram of a broadcast program recording apparatus 100 according to an exemplary embodiment of the present invention.

Referring to FIG. 2, the broadcast program recording apparatus 100 includes a tuner unit 102, a demultiplexer 104, a decoder 106, an EPG processing unit 108, a control unit 110, and a storage unit 112.

The tuner unit 102 tunes and demodulates a broadcast signal that is input on a specific channel that a user chooses, and outputs a transport (TP) stream.

The demultiplexer 104 demultiplexes the TP stream that has been multiplexed and is output by the tuner unit 102 into a video TP stream, an audio TP stream, and EPG information.

The decoder 106 receives and decodes video/audio TP streams separated by the demultiplexer 104 to output video/audio signals.

The control unit 110 controls respective elements of the broadcast program recording apparatus 100 to transmit recording information set by a user to the EPG processing unit 108, inquires about whether a program that the user intends to record will be rebroadcasted, receives the inquiring result and displays the result on a display unit 200 using an OSD or the like. The control unit 110 may store the recording information in a predetermined memory, and the memory may be a read only memory (ROM).

Further, when the user cancels the recording of a program that will be rebroadcasted, the control unit 110 stores basic information about the cancelled program, and informs the user of rebroadcasting before the rebroadcast of the program, thereby allowing the user to view the program when the program is rebroadcasted. The basic information about the cancelled program should include at least a program title and rebroadcast time.

The EPG processing unit 108 analyzes the EPG information output from the demultiplexer 104, generates information about a program that will be broadcasted, searches whether a broadcast program intended to be currently recorded will be rebroadcasted, and outputs the searching result to the control unit 110.

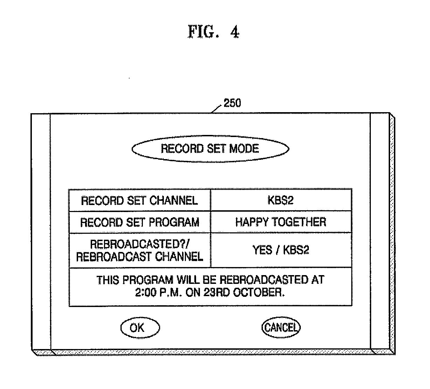

More specifically, referring to FIG. 3, the EPG processing unit 108 includes a broadcast program information generating unit 108a that stores the input EPG information and generates information about a program to be broadcasted in the future and a rebroadcast information searching unit 108b that searches whether a broadcast program intended to be currently recorded will be rebroadcasted using the broadcast program information generated by the broadcast program generating unit 108a. The broadcast program may be searched whether it will be rebroadcasted at any time after starting recording or after completing the recording setting.

Generally, a broadcasting station weekly updates information of programs to be broadcasted during a week and transmits the information to users. The broadcast program information may include a program title, broadcast time information, program rating information, and fee information. In the present invention, the broadcast program information generating unit 108a generates and stores information about a program that will be broadcasted using the EPG information including the broadcast program information, and the rebroadcast information searching unit 108b searches whether the currently recorded program will be rebroadcasted using the information generated by the program information generating unit 108a.

For example, when a program "Happy Together", which is broadcasted on Thursdays, at 11:00-12:00 p.m. on the Korean Broadcasting System (KBS) channel 2, is scheduled to be recorded, the rebroadcast information searching unit 108b searches whether the program "Happy Together" will be rebroadcasted from the broadcast program information generated and stored by the broadcast program information generating unit 108a. If the program will be rebroadcasted, the rebroadcast information including the rebroadcast time information, information about a channel on which the program will be rebroadcasted and the like, which is generated using the EPG information, is displayed to a user through an OSD 250 as shown in FIG. 4, and the user is asked whether to continue to record the program that will be rebroadcasted. The user checks whether the program will be rebroadcasted from the OSD 250 and determines whether to proceed to record the program. Then, the control unit 110 continues or cancels the recording of the program according to the decision of the user.

When determining whether the program will be rebroadcasted, the rebroadcast information searching unit 108b searches first the channel whereon the program is currently broadcasted and then other channels. A program is commonly rebroadcasted on the same channel, but some programs such as sports games may be rebroadcasted on other channels since the same sports game could be broadcasted on several channels. If it cannot be determined whether the program will be rebroadcasted after searching the broadcast program information, it is determined whether a program already recorded is present in the storage unit 112.

As described above, the presence of a program having the same title as the program to be recorded is searched using the program title included in the EPG information, and then it can be determined whether the program will be rebroadcasted. The title of the program may be searched using an analogous word search method or an exact word search method. Since the search methods are well known, the detailed description thereof will be omitted. When EPG information includes image information of a program to be broadcasted, it may be re-confirmed that the program to be broadcasted is identical with the program to be recorded by comparing the image information in addition to searching the programs using the program title. Thus reliability of the searching result can be increased.

Further, when rebroadcasts are newly programmed, the EPG processing unit 108 cyclically searches new EPG information based on specific time, confirms whether the program stored in the storage unit 112 will be rebroadcasted, and outputs the result to the control unit 110.

Under the control of the control unit 110, the storage unit 112 compresses a video/audio signal output from the decoder 106 into a predetermined format and stores it. The storage unit 112 may be a storage medium, such as a hard disk, having a large capacity.

Hereafter, the operation of a broadcast program recording apparatus that has the structure described above and a recording method thereof will be described.

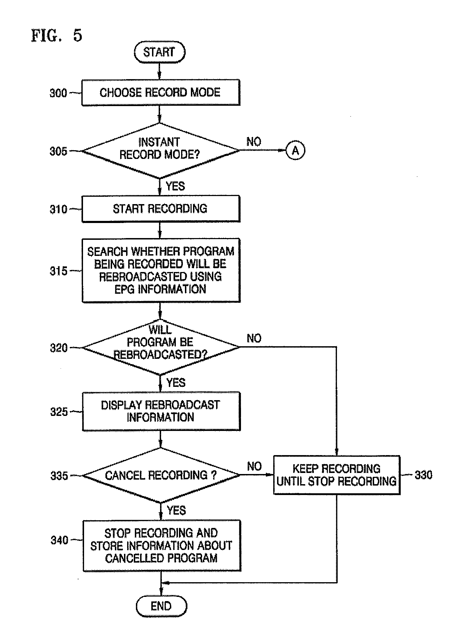

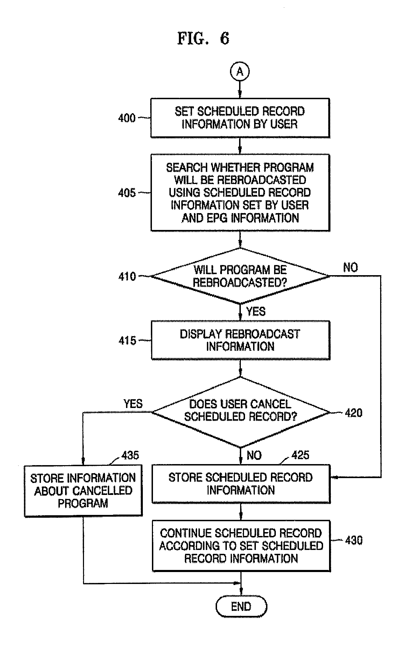

FIG. 5 is a flowchart illustrating an operation of a broadcast program recording apparatus during an instant recording mode according to an exemplary embodiment of the present invention, and FIG. 6 is a flowchart illustrating an operation of the broadcast program recording apparatus during a scheduled recording mode.

A user may choose the instant recording mode, in which the recording is started as soon as the user presses a predetermined recording start key, when the user wants to record the program the user is watching. Further, when the user will not be able to watch a broadcast program, the user previously schedules the desired program to be recorded at a scheduled time using the scheduled recording mode.

Referring to FIG. 5, the user chooses a recording mode for a specific program (operation 300). The user may instantly start recording by pressing a remote controller or an instant recording start key installed on the broadcast program recording apparatus according to the present invention or set a scheduled recording mode using EPG information.

Next, it is determined whether the user chooses the instant recording mode (operation 305). When the instant recording mode is chosen, the broadcast program recording apparatus immediately starts recording a broadcast program and stores the broadcast program in the storage unit 112 (operation 310), and simultaneously the EPG processing unit 108 searches whether the same program as the program being currently recorded will be rebroadcasted in the future by using EPG information obtained from a input broadcast signal (operation 315).

More specifically, as described above, the broadcast program information generating unit 108a uses EPG information to generate information about a program that will be broadcasted and stores the information, and the rebroadcast information searching unit 108b searches whether the program being currently recorded will be rebroadcasted. The rebroadcast information searching unit 108b may compare the title of the program being currently recorded with a title of the program that will be broadcasted included in the program information generated by the broadcast program information generating unit 108a to search whether the program will be rebroadcasted. Further, the searching process can be performed in the order of the channel the program is being currently recorded to other channels, and already recorded programs can be searched as well.

Next, it is determined whether program will be rebroadcasted based on the results of the searching (operation 320). When it is determined that the program is scheduled to be rebroadcasted, rebroadcast information such as scheduled rebroadcast time and a rebroadcast channel is displayed to the user (operation 325). At this time, in the instant recording mode, since the user might be watching the program being currently recorded, the rebroadcast information may be displayed using a small translucent OSD screen at a predetermined position.

Next, after displaying the rebroadcast information, it determined whether the user decides to continue to record the current program or cancel the recording (operation 335). If the user cancels the recording of the current program to watch the program when rebroadcasted later, the recording is stopped. As described above, when the recording of the current program is cancelled, the control unit 110 stores the basic information of the cancelled program, that is, the program title and rebroadcast time, and display them before the program is rebroadcasted to alert the user so as not to miss the rebroadcasted program (operation 340).

Meanwhile, when the program being currently recorded is not scheduled to be rebroadcasted or a user wants to continue to record the program even when the program will be rebroadcasted, the recording is continued until the user stops the recording by pressing the recording stop button (operation 330)

The operations when the user chooses the scheduled recording mode will be described with reference to FIG. 6.

In the scheduled recording mode, by using the EPG information, the information about the program that will be broadcasted is displayed on an OSD screen or the like to the user, and the user set the program scheduled to be recorded through the OSD screen (operation 400).

The control unit 110 transmits the scheduled recording information, particularly, a title of the program scheduled to be recorded and information of scheduled recording time to the rebroadcast information searching unit 108b. The rebroadcast information searching unit 108b compares the information about the program that will be broadcasted which is generated and stored by the broadcast program information generating unit 108a with the scheduled recording information, and searches whether the program the user schedules to record will be rebroadcasted (operation 405). Since the searching operation is the same as in the instant recording mode, the detailed description thereof will be omitted.

Next, it is determined whether program will be rebroadcasted based on the results of the searching (operation 410). If it is determined that the program scheduled to be recorded will be rebroadcasted, information about the rebroadcast time and channel on which the program will be rebroadcasted is displayed to the user and the user is asked whether to continue to schedule recording the program (operation 415).

Next, it is determined whether the user cancels the scheduled recording of the program (operation 420). If the program will not be rebroadcasted or the user chooses to continue to schedule recording the program regardless of whether the program will be rebroadcasted, the scheduled recording information set by the user is stored (operation 425), and like in a normal scheduled recording mode, the scheduled recording will proceed at the set scheduled time (operation 430).

If the user cancels the scheduled recording to watch the program when it is rebroadcasted, as described above, the basic information of the cancelled program is stored to alert the user before the program is rebroadcasted (operation 435), and the scheduled recording mode is terminated.

Meanwhile, with respect to a program completely recorded in the instant recording mode or the scheduled recording mode, the user is informed whether the already recorded and stored program will be rebroadcasted by using cyclically updated EPG information, thereby allowing the user to efficiently utilize the limited capacity of a storage medium. In other words, when the user intends to delete the already stored program, to prevent the user from deleting the program the user wants to watch again, rebroadcast information of the already stored program is searched and displayed such that the user can delete, if necessary, the program that will be rebroadcasted first.

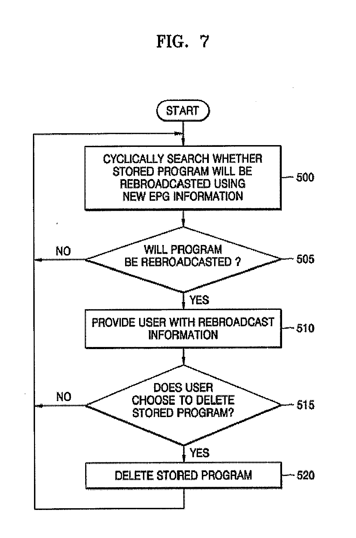

FIG. 7 is a flowchart illustrating a method of searching whether a program stored in the broadcast program recording apparatus will be rebroadcasted according to an exemplary embodiment of the present invention. It is assumed that a predetermined program is stored in the storage unit 112 through the recording process described above.

First, the control unit 110 controls the rebroadcast information searching unit 108b to cyclically search whether the program stored in the storage unit 112 will be rebroadcasted (operation 500). More specifically, the broadcast program information generating unit 108a updates, generates and stores a list of programs that will be broadcasted using new EPG information cyclically updated. The rebroadcast information searching unit 108b searches whether the stored program will be rebroadcasted using a title of the previously stored program and the list of the program that will be broadcasted.

If the stored program will be rebroadcasted, the user is provided with the rebroadcast information (operation 510) to choose whether to delete the stored program or maintain the program.

When the user chooses to delete the program that will be rebroadcasted, the stored program corresponding to the program to be rebroadcasted is deleted, thereby allowing the user to efficiently manage the recording apparatus having a limited storage capacity.

Meanwhile, the method of recording the broadcast program as described above may be used to provide the user with information about whether the program that the user is watching will be rebroadcasted. That is, information about the program to be broadcasted is generated using EPG information included in a broadcast signal, it is searched whether the program the user is watching will be rebroadcasted using the generated information, and the searching result may be provided to the user.

As described above, according to the present invention, a method and apparatus for recording a broadcast program check whether a program intended to be recorded will be rebroadcasted, and, according to the check result, the program is set to be recorded, thereby allowing the apparatus for recording a broadcast program that has a limited storage capacity to be efficiently used.

Further, according to the present invention, when a user intends to simultaneously record two broadcast programs, the user can check rebroadcast information of the programs and easily choose the program to be recorded.

Moreover, according to the present invention, rebroadcast information of an already stored program is cyclically searched and the searching result is provided to a user to help the user easily decide whether to delete or maintain the stored program, thereby allowing the limited storage capacity of the apparatus for recording a broadcast program to be efficiently managed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A recording method for a broadcast program recording apparatus, the recording method comprising:
searching whether a broadcast program to be recorded will be rebroadcasted using information about the broadcast program included in a broadcast signal; and
displaying information about whether the broadcast program will be rebroadcasted according to a result of the searching in order to determine whether to continue or cancel recording of the broadcast program.

2. The recording method of claim 1, wherein the searching comprises searching whether the broadcast program will be rebroadcasted by comparing a title of the broadcast program to be recorded with a broadcast program title included in the information about the broadcast program.

3. The recording method of claim 1 or claim 2, wherein, if the broadcast program to be recorded immediately, recording of the broadcast program is started prior to searching whether the broadcast program will be rebroadcasted.

4. The recording method of any preceding claim, further comprising:
setting scheduled recording information prior to searching whether the broadcast program to be recorded will be rebroadcasted if the broadcast program is to be recorded in the future,
wherein the searching is performed using the scheduled recording information and the information about the broadcast program.

5. The recording method of any preceding claim, wherein the searching comprises searching whether the broadcast program to be recorded will be rebroadcasted on a channel on which the broadcast program is being broadcasted, and searching whether the broadcast program to be recorded will be rebroadcasted on other channels.

6. The recording method of any preceding claim, wherein further comprising searching whether the broadcast program to be recorded has been previously stored.

7. The recording method of any preceding claim, further comprising:
storing rebroadcast information of the broadcast program that will be rebroadcasted if recording of the broadcast program is cancelled; and
displaying the rebroadcast information before the broadcast program is rebroadcasted.

8. The recording method of claim 6, wherein the rebroadcast information includes a title of the broadcast program and scheduled rebroadcast time.

9. The recording method of any preceding claim, further comprising receiving information about new broadcast program and cyclically searching whether a previously stored broadcast program will be rebroadcasted.

10. The recording method of claim 9, further comprising displaying rebroadcast information of the previously stored broadcast program in order to determine whether to delete or maintain the stored program if it is determined that the previously stored broadcast program will be rebroadcasted through the cyclical searching.

11. An apparatus for receiving a broadcast signal including electronic program guide (EPG) information that provides information about a broadcast program and recording the broadcast program, the apparatus comprising:
an EPG processing unit (108) which is operable to search whether a program to be recorded will be rebroadcasted by analyzing the EPG information; and
a control unit (110) which is operable to transmit information about a program to be recorded to the EPG processing unit (108), receive a searching result from the EPG processing unit (108), and cause the searching result to be displayed.

12. The apparatus of claim 11, wherein the EPG processing unit (108) comprises:
a broadcast information generating unit (108a) which is operable to analyze the EPG information and generate broadcast information about a program to be broadcasted; and
a rebroadcast information searching unit (108b) which is operable to search whether the program to be recorded will be rebroadcasted by searching the broadcast information according to a request of the control unit (110) .

13. The apparatus of claim 12, wherein the rebroadcast information searching unit (108b) is operable to search whether the program to be recorded will be rebroadcasted by comparing a title of the program to be recorded with a program title included in the EPG information.

14. The apparatus of claim 12 or claim 13, wherein the rebroadcast information searching unit (108b) is operable to first search a channel on which the program to be recorded is being broadcasted and then to search other channels.

15. The apparatus of claim 13 or claim 14, wherein the rebroadcast information searching unit (108b) is operable to search whether the program to be recorded has been previously stored.

16. The apparatus of any one of claims 11 to 15, wherein, if the program to be recorded will be rebroadcasted and recording of the program to be recorded is canceled, the control unit (110) is operable to store rebroadcast information of the program and to display the rebroadcast information before the program is rebroadcasted.

17. The apparatus of any one of claims 11 to 16, wherein the EPG processing unit (108) is operable to cyclically receive new EPG information and to search whether a previously stored program will be rebroadcasted.

18. A method of providing rebroadcast information of a broadcast program, the method comprising:
searching whether a broadcast program will be rebroadcasted using information about the broadcast program included in a broadcast signal; and
displaying information about whether the broadcast program will be rebroadcasted according to a result of the searching.

19. The method of claim 18, wherein the searching comprises searching whether the broadcast program will be rebroadcasted by comparing a title of the broadcast program to be recorded with a broadcast program title included in the information about the broadcast program.

20. The method of claim 18 or claim 19, wherein, if the broadcast program to be recorded immediately, recording of the broadcast program is started prior to searching whether the broadcast program will be rebroadcasted.

21. The method of any one of claims 18 to 20, further comprising:
setting scheduled recording information prior to searching whether the broadcast program to be recorded will be rebroadcasted if the broadcast program is to be recorded in the future,
wherein the searching is performed using the scheduled recording information and the information about the broadcast program.

22. The method of any one of claims 18 to 21, wherein the searching comprises searching whether the broadcast program to be recorded will be rebroadcasted on a channel on which the broadcast program is being broadcasted, and searching whether the broadcast program to be recorded will be rebroadcasted on other channels.

23. The method of any one of claims 18 to 22, further comprising:
storing rebroadcast information of the broadcast program that will be rebroadcasted if recording of the broadcast program is cancelled; and
displaying the rebroadcast information before the broadcast program is rebroadcasted.

24. The method of claim 23, wherein the rebroadcast information includes a title of the broadcast program and scheduled rebroadcast time.

25. The method of any one of claims 18 to 24, further comprising receiving information about new broadcast program and cyclically searching whether a previously stored broadcast program will be rebroadcasted.
